# EUROPEAN PATENT APPLICATION

(11) **EP 4 769 052 A1**
(43) Date of publication of application: **01.07.2026**
(21) Application number: 24223513.3
(22) Date of filing: 27.12.2024
(51) Int. Cl.: G05D 1/633

(54) **ASSISTING AN OPERATOR DURING AUTONOMOUS OPERATION OF A VESSEL**

(71) Applicant: ABB Schweiz AG, 5400 Baden (CH)
(72) Inventor: BRORSSON, Emmanuel, 724 69 Västerås (SE); BJORNDAL, Petra, 645 52 Strängnäs (SE); MAN, Yemao, 171 55 Solna (SE); COLLING, Alina, 0578 Oslo (NO); HJUKSE, Ola, 3033 Drammen (NO); PELTONIEMI, Niklas, 00240 Helsingfors (FI); TERVO, Kalevi, 00980 Helsinki (FI); LEHTOVAARA, Eero, 00980 Helsinki (FI)
(74) Representative: Kransell & Wennborg KB

(57) **Abstract**

The invention relates to a method, operator assisting device, computer program and computer program product for assisting an operator during 'autonomous operation of a vessel (V1) as well as to a vessel comprising such an operator assisting device, where the vessel (V1) is controlled to move according to a present control scheme in a present passage along a route in a body of water and the method comprises displaying at least one safety zone (SZ) associated with an entity in or of the body of water, which safety zone the vessel (V1) should not enter, which displaying is related to the present passage of the vessel and triggered by at least one primary display trigger condition associated with the body of water and influencing the operation of the vessel (V1) based on the at least one safety zone.

## Description

### TECHNICAL FIELD

The invention relates to a method, operator assisting device, computer program and computer program product for assisting a user during autonomous operation of a vessel as well as to a vessel comprising such an operator assisting device.

### BACKGROUND

In some automation scenarios, vessels are equipped to make autonomous decisions. For instance, a vessel navigating system may continuously determine an optimal manoeuvring strategy, taking into account factors like traffic, environmental constraints, and the need for energy efficiency.

This higher level of automation requires a transformation of maneuver controls. A vessel that automatically navigates using actions in response to signals, will require human supervision, and in some cases, intervention.

In some cases, the system might not have sufficient input regarding an upcoming situation, or it might not handle the situation according to the standards of the monitoring officers.

Therefore, there may exist a need for assisting a vessel operator with regard to the control of the vessel, especially when determining whether to make manual control or not.

There is thus a need for assisting a vessel operator during autonomous control of the vessel.

### SUMMARY

One object of the invention is therefore to assist an operator of a vessel during the automatic control of the vessel.

This object is according to a first aspect achieved through a method for assisting an operator during autonomous operation of a vessel, wherein the vessel is controlled to move according to a present control scheme in a present passage along a route in a body of water.

The method is performed by an operator assisting device and comprises:
displaying at least one safety zone associated with an entity in or of the body of water, which safety zone the vessel should not enter, which displaying is related to the present passage of the vessel and triggered by at least one primary display trigger condition associated with the body of water; and
influencing the operation of the vessel based on the at least one safety zone.

The object is according to a second aspect achieved through an operator assisting device for assisting an operator during autonomous operation of a vessel, wherein the vessel is controlled to move according to a present control scheme in a present passage along a route in a body of water.

The operator assisting device comprises a processor operative to:
display at least one safety zone associated with an entity in or of the body of water, which safety zone the vessel should not enter, which displaying is related to the present passage of the vessel and triggered by at least one primary display trigger condition associated with the body of water; and
influence the operation of the vessel based on the at least one safety zone.

The object is according to a third aspect achieved through a vessel comprising the operator assisting device according to the second aspect.

The object is accord to a fourth aspect achieved through a computer program for assisting an operator during autonomous operation of a vessel, wherein the vessel is controlled to move according to a present control scheme in a present passage along a route in a body of water.

The computer program comprises computer program code which when run by a processor of an operator assisting device causes the processor to:
display at least one safety zone associated with an entity in or of the body of water, which safety zone the vessel should not enter, which displaying is related to the present passage of the vessel and triggered by at least one primary display trigger condition associated with the body of water; and
influencing the operation of the vessel based on the at least one safety zone.

The object is according to a fifth aspect achieved through a computer program product for assisting an operator during autonomous operation of a vessel, where the computer program product comprises a data carrier with the computer program according to the fourth aspect.

The entity may be a geographical area of the body of water covered by the safety zone or another vessel in the body of water.

According to a first variation of the first aspect, the method further comprises receiving weather data.

According to a correspond variation of the second aspect, the operator assisting device is further operable to receive weather data.

In this case the at least one primary display trigger condition may comprise the condition that the weather data fulfils a corresponding weather criterion, where the fulfilment of a weather criterion may comprise the wind having a wind speed above a wind speed threshold and/or the visibility being below a visibility threshold, such as the visibility being shorter than a visibility distance threshold.

According to a second variation of the first aspect, the method further comprises adjusting the at least one safety zone based on the weather data.

According to a correspond variation of the second aspect, the operator assisting device is further operable to adjust the at least one safety zone based on the weather data.

The adjusting may comprise adjusting the size of the at least one safety zone based on the weather data.

The safety zone may also or instead be adjusted based on adjacent fixed obstacles, currents and/or seabed depth. It may thus be adjusted so that obstacles and/or areas with currents and/or seabed depths close to the zone and that fulfil adjustment criteria are added to the zone. The adjustment criterion for a current may be that the current is stronger than a current threshold and the adjustment criterion for a seabed depth may be that it is shallower than a seabed depth threshold.

The fixed obstacles, currents and/or seabed depth may also have a dependency of time, in which case the adjusting of the safety zone may be made considering the dependency of time. The time dependency may be caused by the moon. Ebb and tide may thus influence if a fixed obstacle, current and seabed depth is to be considered or not. A current may additionally have a seasonal dependency.

The influencing of the operation of the vessel may comprise changing the route and/or speed of the vessel.

According to a further variation of the first aspect, the method further comprises receiving communication data, such as radio, AIS and NAVTEX data, analysing the communication data and determining that at least one primary display trigger condition associated with the body of water is fulfilled based on the analysis of the communication data.

According to a correspond variation of the second aspect, the operator assisting device is further operable to receive communication data, such as radio traffic, AIS and NAVTEX data, analyse the communication data and determine that at least one primary display trigger condition associated with the body of water is fulfilled based on the analysis of the communication data.

The at least one safety zone may comprise a moving safety zone surrounding at least one first other vessel.

In this case, radio traffic concerning other vessels around the vessel in question may trigger the display of the moving zone.

In this case it is also possible that the at least one primary display trigger condition comprises the condition that that the course of the other vessel will come within a safety distance of or cross the course of the vessel in question.

It is additionally or instead possible that the at least one primary display trigger condition comprises the condition that the speed of the other vessel is above a speed threshold.

A moving safety zone may also have a shape and/or size that depends on the speed of the other vessel.

The other vessel may have a direction of travel and the moving zone may have a width at right angles to this direction of travel. In this case, the width may vary based on the speed. The width may for instance increase when the speed decreases or decrease when the speed increases.

The other vessel may additionally be of a certain type. In this case the shape and/or size of the moving zone may also depend on the vessel type. Alternatively, the shape and/or size of the moving zone may be related to the specific other vessel.

The at least one vessel safety zone may also comprise a static or semi-static zone covering a geographic area.

A static zone may be a zone that is linked to the geographic area. A semi-static zone may in this case be a zone that additionally has a variation in time, such as depends on ebb and tide, and/or is based on varying weather conditions.

For a static or semi-static zone, radio traffic concerning a geographic area in the body of water may trigger the display of the static or semi-static zone covering the geographic area.

A static or semi-static zone may actually be automatically created by the operator assisting device based on such radio traffic. As an example, the radio traffic may include coordinates of a search and rescue operation and a static or semi-static zone may be created by the operator assisting device around such coordinates.

Moreover, the primary display trigger condition may comprise the existence of an emergency situation in the geographic area covered by the static or semi-static zone, where the emergency situation may be detected through the analysis of the communication data. An emergency situation may exist if there is a search and rescue operation ongoing in the geographic area or if there is an oil-spill there.

The at least one safety zone may comprise a number of parallel safety zones associated with the same entity, where the displaying of at least one safety zone associated with an entity may comprise displaying one of the parallel safety zones associated with the entity triggered by the at least one primary display trigger condition as well as by at least one secondary display trigger condition.

The at least one secondary display trigger condition may thereby be used to select which safety zone associated with the entity that is to be displayed.

The at least one secondary display trigger condition may comprise time, position of the first vessel and/or an ambient light level of the vessel.

The static or semi-static zone may also have a time window in which it is in place.

According to another variation of the first aspect, the method may in this case further comprise determining the time window based on the communication data.

According to a correspond variation of the second aspect, the operator assisting device may in this case be further operable to determine the time window based on the communication data.

If the influencing of the operation of the vessel comprises changing the speed of the vessel, then the speed change may be a sped change through which the vessel avoids entering the static or semi-static zone in the time window.

It should be emphasized that the term "comprises/comprising" when used in this specification is taken to specify the presence of stated features, steps or components, but does not preclude the presence or addition of one or more other features, steps, components or groups thereof.

### BRIEF DESCRIPTION OF THE DRAWINGS

The invention will now be described in more detail in relation to the enclosed drawings, in which:
fig. 1 schematically shows a first way of realizing an operator assisting device,
fig. 2 shows a computer program product in the form of a CD ROM with computer program code used to implement the operator assisting device,
fig. 3 schematically shows a first vessel comprising the operator assisting device,
fig. 4 shows a part of a route along which the first vessel travels together with a box where an operator can change a speed envelope of the first vessel,
fig. 5 shows a flow chart of a number of method steps in a first embodiment of a method of assisting an operator of the first vessel,
fig. 6 shows a navigational chart with the first vessel and a moving safety zone,
fig. 7 shows a flow chart of a number of method steps in a second embodiment of the method of assisting an operator of the first vessel,
fig. 8 shows a navigational chart with a static or semi-static safety zone, and
fig. 9 shows a flow chart of a number of method steps in a third embodiment of the method of assisting an operator of the first vessel.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

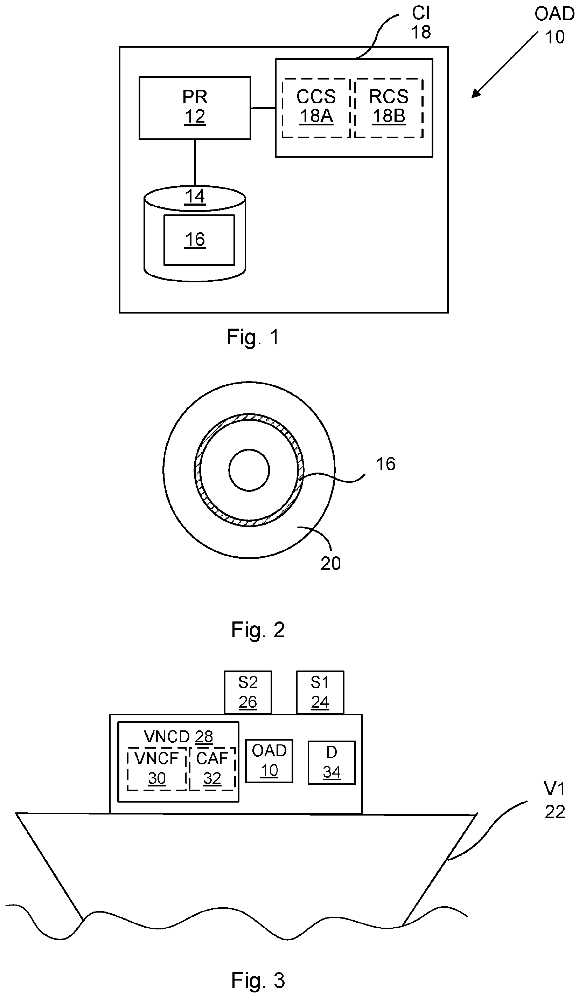

Fig. 1 schematically shows one realization of an operator assisting device OAD 10. In the present example, the operator assisting device 10 comprises a processor PR 12 and a data storage or memory 14 with computer program instructions or computer program code 16 that, when executed by the processor 12, implements an operator assisting function. There is also a communication interface CI 18. The communication interface 18 may have a computer communication section CCS 18A and/or a radio communication section RCS 18B, where the computer communication section 18A may be an Ethernet interface for connection to a local area network (LAN) for instance a LAN provided in a vessel and the radio communication section 18B may comprise a transceiver for transmission and reception of radio signals. It should be realized that it is possible that the communication interface 18 only comprises the computer communication section 18A and not the radio communication section 18B or vice versa.

The operator assisting device 10 may thus comprise a processor 12 with associated program memory 14 including computer program code 16 for implementing the operator assisting function.

A computer program may also be provided via a computer program product, for instance in the form of a computer readable storage medium or data carrier, like a CD ROM or a memory stick, carrying such a computer program with the computer program code, which will implement the operator assisting function when being loaded into a processor. Such a storage medium may be a non-transitory storage medium. One such computer program product in the form of a CD ROM 20 with the above-mentioned computer program code 16 is schematically shown in fig. 2.

The operator assisting device 10 may with advantage be provided in a vessel.

Fig. 3 schematically shows a first vessel V1 22 comprising the operator assisting device OAD 10. As can be seen in the figure, the first vessel 22 also comprises a first sensor S1 24, a second sensor S2 26, a vessel navigation control device VNCD 28 and a display D 34. The vessel navigation control device 28 implements a vessel navigation control function VNCF 30and a collision avoidance function 32. The computer communication section of the previously described communication interface may here be used for communicating with the vessel navigation control device 28, the first and second sensors 24, 26 and the display 34. For this reason, these may all be connected to a LAN.

The first sensor 24 may be a sensor for sensing weather conditions around the first vessel 22. Thereby the first sensor 24 may be a wind sensor that senses the speed and/or direction of the wind. The second sensor 26 may comprise a sensor sensing surrounding traffic, such as an AIS (Automatic Identification System) transceiver. Alternatively or instead, it can comprise a radar, a Lidar or a video camera. It can also comprise a VTS (Vessel Traffic Service) receiver. It can also comprise a radio unit for receiving VHF (Very High Frequency) and/or UHF (Ultra High Frequency) radio traffic.

There may also be other sensors for sensing the vessel position, heading and speed. Alternatively, vessel position, heading and speed may be obtained from the vessel navigation control device 28 together with other vessel operations data such as data about when a change of heading and speed is made and data about commands effecting such change. Also, other sensors may be provided.

Aspects of the present disclosure are directed towards assisting an operator of the vessel during automatic control of the vessel.

In some automation scenarios, vessels are equipped to make autonomous decisions under the supervision of human operators. This autonomous control is performed by the vessel navigation control function 30 of the vessel navigation control device 28, where an operator of the vessel merely monitors this autonomous operation.

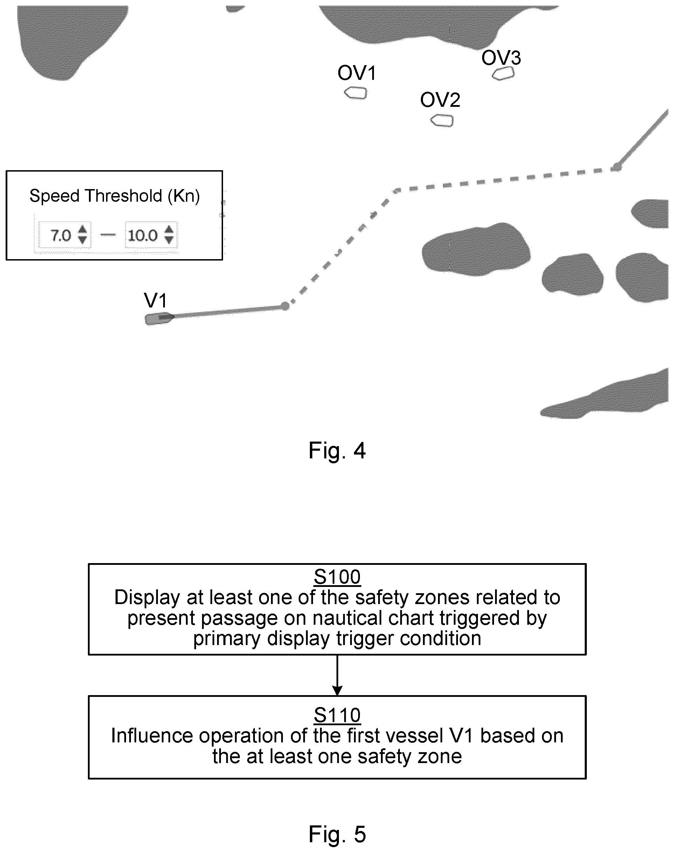

The setting of the autonomous operation can be better understood from fig. 4, which shows an electronic navigational chart together with a first box in which one type of operational change for the first vessel can be made.

The first vessel V1 22 may travel along a route from a point of origin to a point of destination (not shown). This travel may be made in a present passage along the route. During this present passage the vessel navigation control device 28 may control the first vessel 22 according to a present control scheme. Thus, according to this control scheme, the first vessel V1 follows a route in a body of water between an origin and a destination. The control may also have operational envelopes within which the autonomous control is allowed to vary, which control envelopes may be set by an operator. As an example, one operational envelope may be speed. This means that the speed of the autonomous control may be allowed to vary in a speed interval that is set by the operator. As an example, the speed may be allowed to vary between 7.0 and 10.0 knots (kn). It is of course also possible with other operational envelopes, such as acceleration and heading. Different envelopes may also be provided for different parts of the route. For instance, a first speed envelope may be used for a first part of the route, while a second speed envelope is used for a second part of the route, etc.

Thus the operation of the first vessel V1 in the present passage along the route may be controlled by the navigation control device 28 in a present control scheme, where the operator merely is in standby and observing the passage. As an example, the speed of the first vessel 22 is controlled autonomously by the vessel control function 30 inside the envelope 7.0 - 10 kn.

As can be seen in fig. 4, during the passage, the position of the first vessel along the route may also be shown in an electronic navigational chart.

This higher level of automation requires a transformation of maneuver controls. A vessel that automatically navigates using actions in response to signals, will require human supervision, and in some cases, intervention.

In some cases, the vessel navigation control device 28 might not have sufficient input regarding an upcoming situation, or it might not handle the situation according to the standards of the vessel operator.

Therefore, there may exist a need for assisting a vessel operator with regard to the control of the vessel, especially when determining whether to perform manual control or not.

Thus, there are times when interventions are needed to be made both by the system and the operator. In this regard there may exist a need to assist an operator when he or she is to take over control.

There is thus a need for assisting a vessel operator in the determining of when to take over control from an autonomously operated vessel.

Aspects of the present disclosure are directed towards providing such assistance.

This is according to aspects of the present disclosure done using safety zones.

A safety zone may be set by the operator. Alternatively or instead a safety zone may be set by the operator assisting device 10.

A safety zone may also be associated with an entity in or of the body of water-

For an operator, a safety domain or safety zone may refer to the immediate surroundings of the own vessel which should preferably be clear of other vessels. A safety domain may be linked to such another vessel, in which case the zone is a moving zone. The entity may thus be another vessel is the body of water. Alternatively, a zone may be linked to a certain geographic area. The entity may thus be a geographic area of the body of water. It may thus be static or semi-static. In both cases the zone is a zone that the own vessel should not enter.

In order for an operator, such as a maritime offer, to be able to better determine if he or she is to take over control from the vessel navigation control function 30 at least one safety zone may be set for the vessel, which at least one safety zone may comprise a moving safety zone and/or a static or semi-static zone. Such zones may with advantage be set before the first vessel starts to move in the present passage along the route. A moving zone is in this case a zone surrounding one or more other vessels, while a static zone is a zone that is linked to a geographic area. A semi-static zone may in this case be a zone that is linked to a geographic area and also has a variation in time, such as depends on ebb and tide, and/or is based on varying weather conditions.

A moving zone is thus linked to the other vessel and is thus moved as the other vessel is moved, while the static or semi-static zone is stationary or semi-stationary. Thus, the static or semi-static zone does not follow the movement of another vessel but is rather linked to a location or geographic area on the navigational or nautical chart.

The first vessel should not enter any of these zones.

The moving safety zone can be set in a number of different ways. As an example, the zone may be set based on at least one smallest distance from the other vessel, where the first vessel is not allowed to get closer to the other vessel than this smallest distance. The smallest distance may be a generally used smallest distance, that is applicable for all types of vessels. As an alternative a smallest distance may be linked to a type of vessel. A container ship may for instance have one smallest distance while an icebreaker may have another smallest distance. A smallest distance may additionally be linked to a specific vessel. The smallest distances may additionally be linked to the shortest point to approach (CPA), ' the distance to the closest point to approach (DCPA) and/or time to the closest point of approach (TCPA.

Thus, the operator may be allowed to select individual vessels and adjust safety distances to them. After adjustments have been made, the distances can be saved. Saving the adjusted safety distance allows the operator assisting device 10 to reuse these settings during similar conditions. Similar conditions can be vessel-based (e.g. meeting the same vessel or meeting a vessel of a similar type).

Also the boundaries of a static or semi-static safety zone may be set by an operator.

The operator may enter such data concerning safety zone directly via the display, via a keyboard, trackball or mouse. Alternatively, the operator assisting device may determine a safety zone, for instance based on analysing radio traffic.

There may thus be a number of zones that can be used for assisting the operator in relation to the autonomous operation. The zones may for instance be used as tools for allowing the operator to decide that he or she is to take over control of the first vessel 22 from the vessel control device 10. Alternatively, it may be used to give the operator a warning that he or she may be forced to take over control and then there may be an automatic change of control if the first vessel actually enters the safety zone.

Thus, aspects of the present disclosure are directed towards providing improvements in relation to such changes of the automatic control.

How this may be done will now be described in more detail with reference being made to fig. 5, which shows a flow chart of a number of method steps in a first embodiment of a method of assisting an operator of the first vessel 22.

When, during the present passage along the route in the body of water, the first vessel V1 enters an area in the displayed chart where there is at least one safety zone, the at least one safety zone may also be displayed, which displaying is made using the display 34.

The operator assisting device 10 thus displays at least one of the safety zones associated with a corresponding entity in or of the body of water and related to the present passage of the first vessel on the nautical chart, S100, which safety zone is a zone that the first vessel should not enter.

Moreover, this displaying is triggered by a display trigger condition being met or fulfilled. The display trigger condition may comprise a primary display trigger condition that is associated with the body of water. Thus, the operator assisting device 10 displays at least one safety zone that the vessel should not enter on a nautical chart, which displaying is related to the present passage of the vessel and triggered by a primary display trigger condition associated with the body of water. The operator assisting device 10 thus displays the at least one safety zone if one or more primary display trigger conditions are being met, where each primary display trigger condition is associated with the body of water. The primary display trigger conditions may also be adjustable by the operator. The operator may thus be capable of adjusting the display trigger conditions.

For a moving zone, a primary display trigger condition may be met if the course of the other vessel is within a safety distance of or if this course crosses the course of the first vessel V1. It may also be linked to the speed of the other vessel. The primary display trigger condition may for instance be fulfilled if the speed of the other vessel is above a speed threshold.

A primary display trigger condition may also be based on communication data. Thus, the operator assisting device may receive communication data, such as radio, AIS and NAVTEX data, analyse the communication data and determine that a primary display trigger condition associated with the body of water is fulfilled based on the analysis of the communication data.

The communication data may comprise radio traffic data. The displaying of the at least one safety zone may be triggered if there is radio traffic above a radio traffic threshold concerning the body of water. If there is radio traffic, then it is possible that the content of the radio traffic is analysed by the operator assisting device 10. If for instance there is radio traffic concerning surrounding vessels or a geographic area in the body of water, then a moving zone associated with such a vessel or a static or semi-static zone associated with the geographic area may be displayed.

The operator assisting device 10 may also receive weather data. A zone may for instance be displayed if the weather data indicates that the weather conditions are problematic, such as if the wind speed is higher than a wind speed threshold or through there being fog, such as if visibility is below a visibility threshold. The at least one primary display trigger condition may thus comprise the condition that the weather data meets a corresponding weather criterion, such as the wind speed being above a wind speed threshold or the visibility being shorter than a visibility distance threshold.

There may also exist at least one secondary display trigger condition. A secondary display trigger condition may be linked to time, in that a safety zone is triggered to be displayed at a certain time such as at 06:00 or 18:00. Also the position of the first vessel can be used as a secondary display trigger condition. Also an ambient light level of the first vessel can be used as a secondary display trigger condition. It is also possible that the secondary display trigger condition can be adjusted by the operator.

There may also exist a number of parallel moving safety zones associated with the at least one first other vessel or a number of parallel static or semi-static zones associated with a geographic area, where each such parallel zone may be triggered to be displayed at a different time, a different position and/or a different ambient light level in case also the primary display trigger condition is fulfilled.

The at least one safety zone may thus comprise a number of parallel safety zones associated with the same entity, where the displaying of at least one safety zone associated with an entity comprises displaying one of the parallel safety zones associated with the entity triggered by the at least one primary display trigger condition as well as by at least one secondary display trigger condition.

The time, position and ambient light level is thus a secondary display trigger condition, where the earlier mentioned radio traffic, weather data, course and speed are primary display trigger conditions. The primary display trigger condition then determines that a safety zone is to be displayed and the secondary display trigger condition is used to determine which of the parallel safety zones that is to be displayed.

The secondary display trigger may also be considered to be a zone change trigger. The shape and/or size of a safety zone may be changed based on this zone change trigger, such a zone change trigger may be based on time. The shape and/or size of a zone may be changed at a certain point in time, such as at 06:00 or 18:00. It may also or instead be based on the position of the first vessel. If the first vessel has a light sensor, the shape and/or size may be changed when a certain ambient light level is detected.

It should here be realized that a displayed zone may also be adjusted based on the weather data. The adjusting may comprise adjusting the size of the at least one safety zone based on the weather data. If for instance there is fog, it is possible that the size of the zone is increased. Also, strong winds may affect the size of the zone. At least the size of the zone in a direction towards the wind may be increased.

The size of the zone may additionally be adjusted based on adjacent fixed obstacles, currents and/or seabed depth. The size of the zone may thus be adjusted based on obstacles, currents and/or seabed depth close to the zone. The safety zone may also or instead be adjusted based on adjacent fixed obstacles, currents and/or seabed depth. It may thus be adjusted so that obstacles and/or areas with currents and/or seabed depths close to the zone and that fulfil adjustment criteria are added to it. The adjustment criterion for a current may be that the current is stronger than a current threshold and the adjustment criterion for a seabed depth may be that it is shallower than seabed depth threshold.

Furthermore, the fixed obstacles, currents and/or seabed depth may have a dependency of time and the adjustment of the safety zone may be made considering the dependency of time. The time dependency may be caused by the moon. Ebb and tide may thus influence if a fixed obstacle, current and seabed depth is to be considered or not. A current may additionally have a seasonal dependency. For instance, it may be strong in the summer and weak in the winter.

The size of a moving zone may be adjusted by the speed of the corresponding other vessel. The width of the zone, e.g.. the distance between one side of a geometrical figure forming the zone and the starboard side and between an opposite side of geometrical figure and the port side may get lower with increasing vessel speeds. The width of the zone at right angles to the direction of travel may thus vary based on the speed. The width may for instance increase when the speed decreases or decrease when the speed increases. As an example, a slow speed may be more circular while a high speed may be elliptical.

When the display of a safety zone has been triggered, the operator is able to see the safety zone and the vessel and assess whether the autonomous operation is to be stopped or suspended or if autonomous operation is to continue.

Also the operation of the first vessel may be influenced based on the at least one safety zone, S110. Thus, the operation may also be influenced in case the display trigger condition is met or fulfilled. For instance, data of a moving zone may be provided to the collision avoidance function 32 so that it may perform a collision avoidance activity based on it. The route of the first vessel V1 may also be recalculated for avoiding the safety zone. There may also be a change of speed of the first vessel for avoiding entering the safety zone. It is clear that this can be done for a moving zone. However, it can also be made for a static or semi-static zone.

A static or semi-static zone may be linked to a time window. The static or semi-static zone may thus have a time window in which it is in place. In this case the vessel speed of the first vessel may additionally or instead be changed so that it does not enter the static or semi-static zone in the time window.

The time window may be determined based on knowledge of a temporary situation in an area along the route and possible also on knowledge of other vessels in the area, such as based on if there is a search and rescue operation. The time window may additionally or instead be determined based on the communication data. It is possible that radio communication includes information about the start of a rescue and search operation. It may also include information about expected length and/or information about the end of operation. The length can also be estimated using machine learning based on the number of involved vessels, type of search and rescue operation and historic data.

The time window may be used as an input for the determining of a change of speed of the first vessel.

Furthermore, if the first vessel V1 despite such measures enters a safety zone, then the autonomous operation may be stopped or suspended. Also, collision avoidance may be automatically initiated.

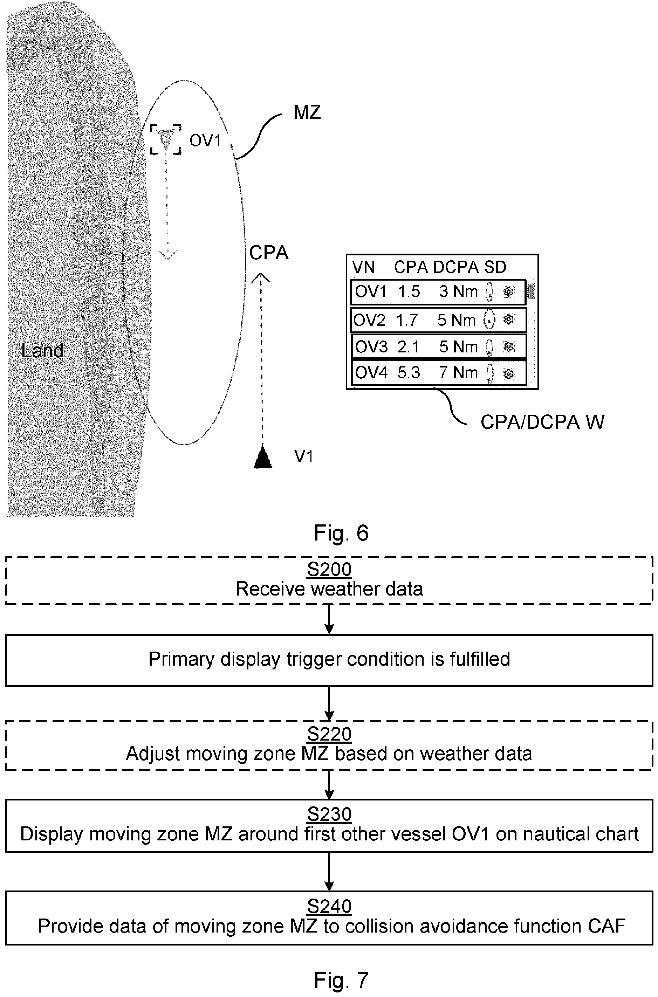

A second embodiment will now be described with reference being made to fig. 6 and 7, where fig. 6 shows a navigational chart with the first vessel V1 and a safety zone that is a moving zone MZ, while fig. 7 shows a flow chart of a number of method steps in the second embodiment of the method of assisting the operator of the first vessel.

In this case there is a moving zone MZ associated with a first other vessel OV1. This is a zone surrounding the first other vessel OV1 and the first vessel V1 should not enter this moving zone MZ.

The basic shape and size of the moving zone MZ could have been set in any of the ways previously described in relation to the first embodiment.

The shape and/or size of the moving zone may be linked to the specific vessel. It may thus be dedicated to the specific other vessel. Alternatively, the shape and/or size may be linked to the type of vessel. The size and/or shape of the moving zone may thus depend on the vessel type. The moving zone may additionally be based on the CPA or DCPA of the specific vessel or the vessel type, where information about CPA and DCP may be obtained via AIS.

In the example of fig. 6, there is a moving zone MZ provided for and surrounding a first other vessel OV1, where the first other vessel OV1 as an example is travelling in essentially the opposite direction of the first vessel V1.

Optionally the operator assisting device receives weather data, S200, for instance from the first and/or the second sensor 24, 26, such as data about the wind conditions or data indicating that there is fog. A wind sensor may provide data indicating the wind speed and wind direction while a captured image may be used to deduce that there is fog.

As was mentioned earlier the moving zone is displayed if a primary display trigger condition is met or fulfilled, where the primary display trigger condition is associated with the body of water.

In the present example such a primary display trigger condition is fulfilled, S210. As was mentioned earlier, the primary display trigger condition may be fulfilled if the course of the first other vessel OV1 is within a safety distance of or crosses the course of the first vessel V1. That the first other vessel OV1 is expected to cross the route of the first vessel V1 may be deduced by the operator assisting device 10 from AIS messages or ARPA (Automatic radar plotting aid) information concerning the first other vessel OV1. The deducing may with advantage be made using machine-learning.

The primary display trigger condition may also or instead be linked to the speed of the first other vessel OV1. The primary display trigger condition may for instance be fulfilled if the speed of the first other vessel OV1 is above a speed threshold. The primary display trigger condition may also be based on traffic data. The displaying of the at least one safety zone may be triggered if there is radio traffic above a radio traffic threshold. If there is radio traffic concerning the first other vessel OV1, then this may also be a primary display trigger condition being met. A primary display trigger condition may also be linked to the weather data in the way described in the first embodiment. The moving zone MZ may for instance be displayed if the weather data indicates that the weather conditions are problematic. Also here the primary display trigger condition can be adjustable.

There may also exist a number of parallel safety zones associated with the first other vessel as well as a secondary display trigger condition linked to time, position of the first vessel and/or an ambient light level of the first vessel, The fulfilment of the secondary display trigger condition may then be used to select which of the parallel safety zones that is to be displayed.

Also here the size and/or shape may optionally be adjusted based on the weather data, S220.

For instance, if there is a strong wind, then the size of the zone in the direction of the wind towards the first vessel V1 may be increased. It is also possible that the size of the zone in the opposite direction of this wind is decreased. If there is fog, the size of the whole moving zone MZ may be increased.

The shape or size may additionally depend on the speed of the first other vessel OV1. As was mentioned earlier, the width of the zone at right angles to the direction of travel may thus vary based on the speed. The width may for instance increase when the speed decreases or decrease when the speed increases. As an example a slow speed may be more circular while a high speed may be elliptical.

It is likewise possible that the moving zone is adjusted based on obstacles, currents and seabed depth. An obstacle such as a reef that is close to the moving zone may be added to it as may areas of strong current and insufficient seabed depth for the first vessel V1.

Thereafter the operator assisting device 10 displays the moving zone MZ on the nautical chart around the first other vessel OV1, S230.

In the present example, data about the moving zone VSZ is also provided to the collision avoidance function 32, S240, which provision may also be made in case the primary display trigger condition is met or fulfilled.

Thereby the collision avoidance function 32 may be activated if the first vessel V1 enters the moving zone or is deemed to be entering the moving zone MV, where the collision avoidance may involve changing the speed of the first vessel V1, changing the course of the first vessel V1, changing both the speed and the course of the first vessel V1, stopping the first vessel V1 or performing some other measure, which measure may be presented to the operator and implemented after being accepted.

Another possibility is that the autonomous control of the first vessel V1 is left and that the operator him- or herself controls the first vessel V1 as it enters or is deemed to enter the moving zone MZ.

It is likewise possible that the autonomous control of the first vessel is influenced based on the at least one primary display trigger condition being met. The route may be recalculated and/or the speed changed for avoiding the moving zone MZ.

As can be seen in fig. 6, a list of surrounding vessels may be provided, including their names, closest point of approach (CPA), distance to that CPA (DCPA), as well as a graphical representation of the safety distances currently set to that vessel. Although it is not shown, the list could also include the time to the closest point of approach (TCPA). As an example, a list is provided for the first other vessel OV1, a second other vessel OV2, a third other vessel OV3 and a fourth other vessel OV4. A graphical representation of the safety distance can also be activated for the ENC.

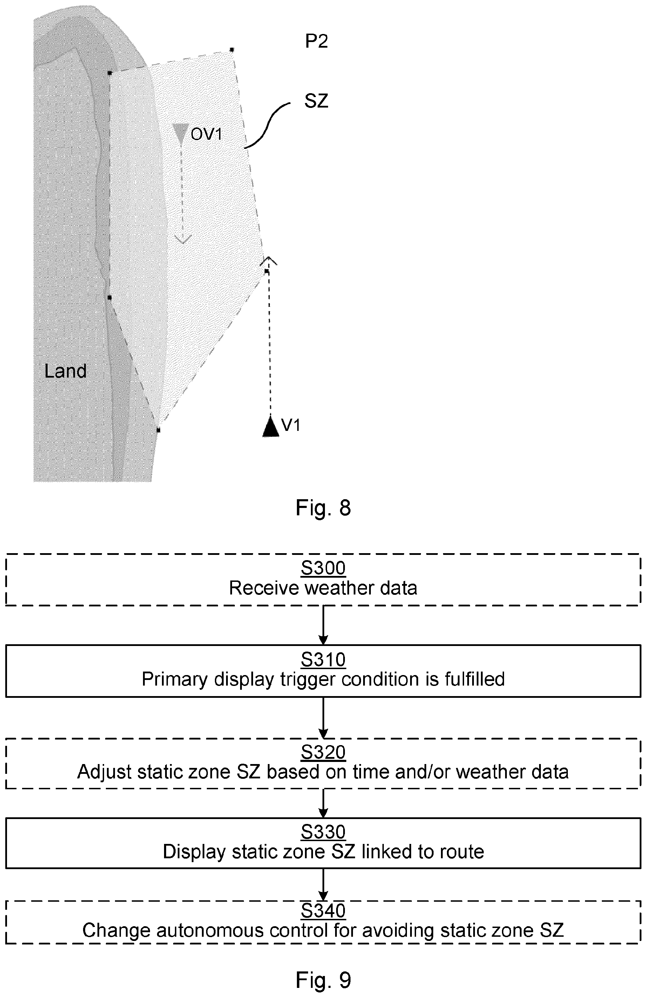

Now a third embodiment will be described with reference being made to fig. 8 and 9, where fig. 8 shows a navigational chart with a static or semi-static zone, while fig. 8 shows a flow chart of a number of method steps in the third embodiment of the method of assisting an operator of the first vessel.

The method may start with the optional step of the operator assisting device receiving weather data, S300, which may be in the form of wind data from the first sensor S1 and/or in the form of images received from a camera or Lidar of the second sensor 26, which images may be analysed in order to determine if there is fog.

As have been mentioned earlier, a static or semi-static zone may be determined by an operator beforehand, i.e. before travel along the route is started. This may be done in the way described in the first embodiment.

Thus, boundaries of the static or semi-static zone may have been set by the operator. Alternatively, the zone may be determined by the operator assisting device 10, for instance based on an analysis of received radio traffic. Thus, the operator assisting device 10 may itself determine the zone SZ without or with limited involvement from the operator. Put differently, a static or semi-static zone may be automatically created by the operator assisting device 10 based on such radio traffic. If for instance the second group of sensors 26 comprises radio circuitry, it is possible that the operator assisting device 10 detects radio traffic concerning a search and rescue (SAR) operation in a geographic area and determine that there is a static or-semi-static zone covering this area. As an example, the radio traffic may include coordinates of a search and rescue operation or of another emergency situation and a static or semi-static zone may be created by the operator assisting device 10 around these coordinates.

The static or semi-static zone SZ is linked to the route that the first vessel V1 takes. The zone SZ may be provided adjacent the route or the route may initially pass through the zone SZ. If the first vessel V1 is traveling along the route and has a present position along the route at a present point in time, then the static or semi-static zone SZ is linked to a future point on the route, i.e. to a point on the route that the first vessel V1 will pass at a later point in time.

As was mentioned earlier, the static or semi-static zone SZ is displayed if at least one primary display trigger condition is fulfilled or met, where the primary display trigger condition is associated with the body of water.

Thus, there is a fulfilment of the primary display trigger condition, S310, and the operator assisting device 10 displays the at least one safety zone based on if one or more primary trigger conditions are being met, where each primary display trigger condition is associated with the body of water.

As can be seen above, the primary display trigger condition may be based on traffic data. The displaying of the at least one safety zone may be triggered if there is radio traffic above a radio traffic threshold. If there is radio traffic, then it is possible that the content of the radio traffic is analysed, if for instance there is radio traffic concerning the geographic area, then a static or semi-static zone associated with the geographic area may be displayed. This may for instance be the case if there is radio traffic indicating that there is an emergency situation in the geographic area, such as if there is a search and rescue operation ongoing in the zone or if the area is to be avoided for some other reason, like if there is an oil-spill there.

Data captured from internal systems such as radar, AIS and GPS (Global Positioning System), communication data such as in VHF or UHF (Ultra High Frequency) radio calls, satellite messages and NAVTEX messages may be analysed and used as a base for determining a static or semi-static zone.

For example, if the first vessel V1 is informed by VTS or some shore-based maritime service organisation about a certain navigational hazard, for instance through a VHF call, that key information in that communication may be extracted and used to determine and trigger the display of the static or semi-static zone.

Alternatively, the operator may have been told by the captain before the departure that there is a search and rescue mission happening in the area and then set up or determine the static or semi-static zone covering the area.

Thus, the operator assisting device 10 may automatically capture communication data from the VHF call and use it to create the static or semi-static zone.

If as another example the first vessel V1 receives a VTS call with the content "oil spill and floating container discovered stay cautious". This VTS message may be transcribed, the text analysed for identifying the area and a zone determined around the area. The analysis may with advantage be made using machine-learning.

Also, the previously mentioned weather data may cause a display of the static or semi-static zone SZ if it meets a corresponding primary display trigger condition. A zone may for instance be displayed if the weather data indicates that the weather conditions are problematic, such as if the wind speed is higher than a wind speed threshold or through there being fog, such as if the visibility is below a visibility threshold. The at least one condition may thus comprise the condition that the weather data meets a corresponding weather criterion, such as the wind speed being above a wind speed threshold or the visibility being shorter than a visibility distance.

Also here the primary display trigger condition can be adjustable.

The size and/or shape of the zone SZ may additionally be adjusted based on time and/or weather data, S320.

Thus, the zone SZ may be adjusted based on the weather data. If for instance there is fog, it is possible that the size of the zone is increased. Also, strong winds may affect the size of the zone. At least the size of the zone in a direction towards the wind may be increased.

Moreover, in the determining of the static or semi-static zone SZ, the operator assisting device 10 may consider the seabed level, currents and fixed obstacles such as reeves. If for instance there is a reef just outside the area initially determined to be a static or semi-static zone SZ, then this may be added to the zone. A seabed-level adjacent an operator selected static or semi-static zone SZ that is too shallow for the first vessel V1 may as an example also be added to the zone.

The size of the zone may thus be adjusted based on adjacent fixed obstacles, currents and/or seabed depth. The size of the zone may thus be adjusted based on obstacles, currents and/or seabed depth close to the zone.

Furthermore, the seabed depth and possibly also the fixed obstacles and currents may have a dependency of time and the adjustment of the safety zone may be made considering the dependency of time. Ebb and tide may influence if a fixed obstacle, current and seabed depth is to be considered or not. A current may additionally have a seasonal dependency. The static or semi-static zone SZ may be expanded or returned towards its initial operator or operator assisting device defined shape based on the present relationship between the water level and the seabed and/or reef.

The zone SZ may also be expanded based on the weather data. Wind from a certain direction may for instance expand the zone in that direction. Fog may in turn expand the zone in all directions.

There may also be several parallel static or semi-static zones associated with the geographic area and the use of a secondary display trigger condition linked to time, position of the first vessel and/or ambient light level for selecting which static or semi-static zone to display.

The operator assisting device 10 then displays the static or semi-static zone SZ related to the present passage of the first vessel on the nautical chart, S330, which displaying is thus triggered by a primary display trigger condition being met and possibly also a secondary display trigger condition being met. Thus, the operator assisting device displays the static or semi-static zone SZ that the vessel should not enter, which displaying is related to the present passage of the vessel.

As was mentioned earlier, the operation of the first vessel is influenced based on the zone or on the display trigger condition being met or fulfilled. In this case this may be done through changing the autonomous control for avoiding the static or semi-static zone, S340, which change may involve a change of route and/or a change of speed.

A static or semi-static zone SZ may have a time dependency in which it is in place. A search and rescue operation may for instance be carried out in a time window or time interval and if the time widow expires or if the operation is completed before the time window expires then the zone may cease to be relevant.

A change of speed may involve changing the speed so that the first vessel avoids entering the zone SZ during the time window.

Thereby, it can be seen that the operator can define static areas straight on the ENC, which become static or semi-static zones that the automated driving mode should avoid. These areas can also be adjusted.

Thus, the operator may be allowed to set boundaries of the static or semi-static zone for the first vessel V1. After adjustments have been made, the boundaries can be saved. Saving the boundaries allows the operator assisting device to reuse these settings during similar conditions. Similar conditions can be location based (returning to the same location in the future).

The previous described aspects have a number of advantages. The operator has the ability to proactively set and adjust constraints for automated driving mode to adapt to dynamic traffic situations. One advantage of this is the capability for the operator to visually see how constraints for the vessel that is driven relate to the surrounding traffic and geography. In situations where several vessels are involved, these visual indications of safety distances and no-go zones reduces the cognitive load of remembering and calculating how the set parameters affect the traffic situation.

Also, the safety zones are displayed based on display trigger conditions being met. Thereby only safety zones that may be of relevance to the operator are displayed. This improves the overview as the display of unnecessary information is avoided.

Through the same trigger conditions being used to influence the operation of the vessel, it is also possible to allow autonomous control to be continued longer even if a potentially dangerous situation occurs that would normally lead to the operator having to take over control.

As was mentioned above, the operator assisting device may provide for communication data capture. It may capture and log communication data like VHF calls, and use them for creating and/or triggering the display of a safety zone.

The operator assisting device may also provide for external data integration, e.g., it can log external data feeds like weather updates, traffic news and trigger the display of safety zones also based on this data.

As was also mentioned above, there may exist a secondary display trigger or a zone change trigger. This trigger may be adjustable. The secondary display trigger or zone change trigger may be triggered by time, position of the first vessel and/or an ambient light level of the first vessel.

The shape and/or size of a safety zone may be changed based on this trigger. In the case of time, the shape and/or size may for instance be changed at a certain hour, such as at 06:00 or 18:00. It may also or instead be based on the position of the first vessel.

A safety zone may cover several different objects, such as reefs, buoys and vessels. The operator maybe able to set up which objects are to be considered in a safety zone and also a number of safety distances that are to be used in relation to these objects. The operator may thus define and/or change settings that define the safety zone.

Moreover, the settings that define a safety zone may be linked to time, such as the time of day. There may thus be several safety zones linked to another vessel or geographic area, which safety zones may be valid for different hours of the day. There may for instance be one safety zone linked to the day and another linked to the night. It is also possible with safety zones linked to dusk and/or dawn.

The secondary display trigger or zone change trigger may then be used for changing zone, which may involve changing one or more of the parameters that are used to define the safety zone and/or a change of which values the parameters are to have, such as what safety distances are to be used to the objects of the safety zone.

For example, there might be a set of parameters of "Open_Water_Day" and "Open_Water_Night", which activate on the same geographical area but on different hourly triggers. In the "Day"-package, distances/safety zones to various objects & vessels might be smaller because there is better visibility while in the "Night" package, the distances to the same objects and vessels are larger. Now there might be a case where one evening, the sight is exceptional. The sunset is beautiful, there are no clouds and visibility is high. In this case, the operator might want to prolong the use of the "Open_Water_Day" package which they would then do by adjusting the trigger point for "Open_Water_Night" to activate either on a later hour & minute or at a geographical location further ahead.

While it's possible to reach the same result by increasing individual distances to individual objects (which should also be possible for fine tuning within a package), adjusting the trigger as a whole changes when a full package of multiple distance profiles of similar nature which makes it scale better to managing larger sets of distance profiles.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore, the invention is only to be limited by the following claims.

## Claims

1. A method for assisting an operator during autonomous operation of a vessel (22), wherein the vessel (22) is controlled to move according to a present control scheme in a present passage along a route in a body of water, the method being performed by an operator assisting device (10) and comprising:
displaying (S100; S230; S330) at least one safety zone (MZ; SZ) associated with an entity in or of the body of water, which safety zone the vessel (V1) should not enter, which displaying is related to the present passage of the vessel and triggered by at least one primary display trigger condition associated with the body of water; and
influencing (S110; S240; S340) the operation of the vessel (V1) based on the at least one safety zone.

2. The method as claimed in claim 1, wherein the influencing of the operation of the vessel (V1) comprises changing the route and/or speed of the vessel (V1).

3. The method according to claim 1 or 2, further comprising receiving (S200; S300) weather data.

4. The method according to claim 3, wherein the at least one primary display trigger condition comprises the condition that the weather data fulfils a corresponding weather criterion (S210; S310).

5. The method as claimed in claim 3 or 4, further comprising adjusting (S220; S320) the at least one safety zone (VSZ; NGZ) based on the weather data.

6. The method according to any previous claim, further comprising receiving communication data, such as radio traffic, AIS and NAVTEX data, analysing the communication data and determining that a primary display trigger condition associated with the body of water is fulfilled based on the analysis of the communication data.

7. The method as claimed in any previous claim, wherein the safety zone is adjusted based on adjacent fixed obstacles, currents and/or seabed depth.

8. The method according to claim 7, wherein the fixed obstacles, currents and/or seabed depth have a dependency of time and the adjusting of the safety zone is made considering the dependency of time.

9. The method according to any previous claim, wherein the at least one safety zone comprises a number of parallel safety zones associated with the same entity, where the displaying of at least one safety zone (MZ; SZ) associated with an entity comprises displaying one of the parallel safety zones associated with the entity triggered by the at least one primary display trigger condition as well as by at least one secondary display trigger condition.

10. The method according to any previous claim, wherein the at least one entity comprises a first other vessel (OV1) in the body of water and the at least one safety zone comprises a moving safety zone (MSZ) surrounding the first other vessel (OV1).

11. The method according to claim 10, wherein the at least one primary display trigger condition comprises the condition that that the course of the first other vessel (OV1) will come within a safety distance of or cross the course of the vessel (V1).

12. The method as claimed in claim 10 or 11, wherein the moving safety zone (MZ) has a shape and/or size that depends on the speed of the first other vessel (OV1).

13. The method as claimed in any previous claim, wherein the at least one entity comprises a geographic area in the body of water and the at least one safety zone comprises a static or semi-static zone (SZ) covering the geographic area.

14. The method as claimed in claim 13 when depending on claim 6, wherein the at least one primary display trigger condition comprises the existence of an emergency situation in the geographic area, said emergency situation being detected in said analysis of the communication data.

15. The method as claimed in claim 13 or 14, wherein the static or semi-static zone has a time window in which it is in place.

16. The method as claimed in claim 15, further comprising determining the time window based on the communication data.

17. An operator assisting device (10) for assisting an operator during autonomous operation of a vessel (22), wherein the vessel (22) is controlled to move according to a present control scheme in a present passage along a route in a body of water, the operator assisting device (10) comprising
a processor (12) operative to:
display at least one safety zone (MZ; SZ) associated with an entity in or of the body of water, which safety zone the vessel (V1) should not enter, which displaying is related to the present passage of the vessel and triggered by at least one primary display trigger condition associated with the body of water; and
influence the operation of the vessel (V1) based on the at least one safety zone.

18. A vessel (22) comprising the operator assisting device (10) according to claim 17.

19. A computer program for assisting an operator during autonomous operation of a vessel (22), wherein the vessel (22) is controlled to move according to a present control scheme in a present passage along a route in a body of water, the computer program (16) comprising computer program code which when run by a processor (12) of an operator assisting device (10) causes the processor (12) to:
display at least one safety zone (MZ; SZ) associated with an entity in or of the body of water, which safety zone the vessel (V1) should not enter, which displaying is related to the present passage of the vessel and triggered by at least one primary display trigger condition associated with the body of water; and
influencing (S130; S250; S350) the operation of the vessel (V1) based on the at least one safety zone.

20. A computer program product for assisting an operator during autonomous operation of a vessel (22), the computer program product comprising a data carrier (20) with said computer program (16) according to claim 19.
